Europäisches Patentamt

European Patent Office

Office européen des brevets

(11) Veröffentlichungsnummer : **0 023 683**
**B1**

(12) # EUROPÄISCHE PATENTSCHRIFT

(45) Veröffentlichungstag der Patentschrift :
29.02.84

(51) Int. Cl.³ : **H 02 M   7/217, H 02 M   1/18**

(21) Anmeldenummer : 80104397.7

(22) Anmeldetag : 25.07.80

(54) **Gleichrichterbrückenschaltung.**

(30) Priorität : 02.08.79 DE 2931465

(43) Veröffentlichungstag der Anmeldung :
**11.02.81 Patentblatt 81/06**

(45) Bekanntmachung des Hinweises auf die Patenterteilung : **29.02.84 Patentblatt 84/09**

(84) Benannte Vertragsstaaten :
**AT BE CH FR GB IT LI LU NL SE**

(56) Entgegenhaltungen :
**DE-B- 1 093 002**
**FR-A- 2 208 243**
**US-A- 4 027 240**
**MESSEN + PRÜFEN/AUTOMATIK, Band 9, Nr. 9,**
**September 1973, H. KARGER "Messumformer für**
**Grössen der Starkstromtechnik in Betriebsanlagen",**
**Seiten 549 bis 552**

(73) Patentinhaber : **SIEMENS AKTIENGESELLSCHAFT**
**Berlin und München Wittelsbacherplatz 2**
**D-8000 München 2 (DE)**

(72) Erfinder : **Fuchs, Ernst, Dipl.-Ing.**
**Forstenrieder Allee 6**
**D-8000 München 71 (DE)**
Erfinder : **Vogeler, Torsten, Dipl.-Ing.**
**Wiener Strasse 6**
**D-8023 Pullach (DE)**

Gleichrichterbrückenschaltung

Die Erfindung bezieht sich auf eine Gleichrichterbrückenschaltung, bei der als Gleichrichterelemente vier Transistoren vorgesehen sind, von denen jeweils zwei vom gleichen Leitfähigkeitstyp sind, bei der die miteinander verbundenen Emitter von jeweils zwei Transistoren vom entgegengesetzten Leitfähigkeitstyp an jeweils einer Eingangsklemme angeschlossen sind, bei der an den miteinander verbundenen Kollektoren von jeweils zwei Transistoren vom gleichen Leitfähigkeitstyp eine gleichgerichtete Ausgangsspannung abgegeben wird und bei der die Basen derjenigen Transistoren, deren Emitter mit jeweils einer Eingangsklemme verbunden sind, über Widerstände mit der jeweils anderen Eingangsklemme verbunden sind.

Es sind bereits Gleichrichterbrückenschaltungen allgemein bekannt, bei denen als Gleichrichterelemente Dioden vorgesehen sind. Derartige Gleichrichterbrückenschaltungen haben den Nachteil, daß, selbst bei Verwendung von Germanium-Dioden an den Gleichrichterelementen eine verhältnismäßig große Spannung abfällt.

Aus der DE-A 23 21 897 ist eine Gleichrichterbrückenschaltung bekannt, bei der als Gleichrichterelemente vier Transistoren vorgesehen sind, von denen jeweils zwei den gleichen Leitfähigkeitstyp aufweisen. Die Emitter von jeweils zwei Transistoren vom entgegengesetzten Leitfähigkeitstyp sind mit jeweils einer Eingangsklemme verbunden, an der Eingangsspannungen unterschiedlicher Polarität anliegen. An den Verbindungspunkten von den Kollektoren von jeweils zwei Transistoren vom gleichen Leitfähigkeitstyp werden gleichgerichtete Ausgangsspannungen abgegeben. Die Basen der Transistoren sind kreuzweise miteinander verbunden. Die bekannte Gleichrichterbrückenschaltung hat den Nachteil, daß die Temperatur und die Stromabhängigkeit der Basisemitterspannungen der Transistoren die Ausgangsspannungen ungünstig beeinflußt. Weiterhin fließt derjenige Anteil des Eingangsstroms, der von einem Verbraucher nicht benötigt wird, durch die Basis-emitterstrecken und kann diese überlasten.

Die FR-A-2 208 243 offenbart eine Gleichrichterbrückenschaltung, bei der als Gleichrichterelemente ebenfalls vier Transistoren vorgesehen sind. Die Basen derjenigen Transistoren, deren Emitter mit jeweils einer Eingangsklemme verbunden sind, sind über Widerstände mit der jeweils anderen Eingangsklemme verbunden. Diese Gleichrichterbrückenschaltung bewirkt einen geringen Spannungsabfall, so daß die Momentanwerte der Ausgangsspannungen nur geringfügig kleiner sind als die Momentanwerte der Eingangsspannungen. Die Ausgangsspannungen sind nur um die Durchlaßspannungen von zwei leitenden Transistoren geringer als die Eingangsspannung und diese Durchlaßspannungen sind bei kleinen Strömen wesentlich kleiner als die Durchgangsspannungen von Dioden bei üblichen Gleichrichterbrückenschaltungen, bei denen als Gleichrichterelemente Dioden vorgesehen sind. Bei größeren Ausgangsströmen sind verhältnismäßig große Transistoren erforderlich und für die Durchsteuerung werden verhältnismäßig große Basisströme benötigt, die der Spannungsquelle über die Eingangsklemmen entnommen werden.

Der Erfindung liegt daher die Aufgabe zugrunde, eine Gleichrichterbrückenschaltung anzugeben, die in der Lage ist, bei geringer zusätzlicher Belastung der Spannungsquelle verhältnismäßig große Ströme abzugeben und die dennoch einen geringen Spannungsabfall bewirkt.

Erfindungsgemäß wird die Aufgabe bei der Gleichrichterbrückenschaltung der eingangs genannten Art dadurch gelöst, daß parallel zu den Kollektor-Emitterstrecken der Transistoren Dioden angeordnet sind, deren Durchlaßrichtung mit der Durchlaßrichtung der Transistoren übereinstimmt.

Die Gleichrichterbrückenschaltung gemäß der Erfindung hat den Vorteil, daß sie einen geringen Aufwand erfordert, daß sie zuverlässig arbeitet und von Temperaturänderungen weitgehend unabhängig ist.

Eine hohe Zuverlässigkeit wird insbesondere dann erreicht, wenn als Transistoren des einen Leitfähigkeitstyps pnp-Germanium-Transistoren und als Transistoren des anderen Leitfähigkeitstyps npn-Silizium-Transistoren vorgesehen sind, da pnp-Germanium-Transistoren eine höhere Basisemittersperrspannung aufweisen als pnp-Silizium-Transistoren und da npn-Silizium-Transistoren eine höhere Basisemittersperrspannung als npn-Germanium-Transistoren aufweisen.

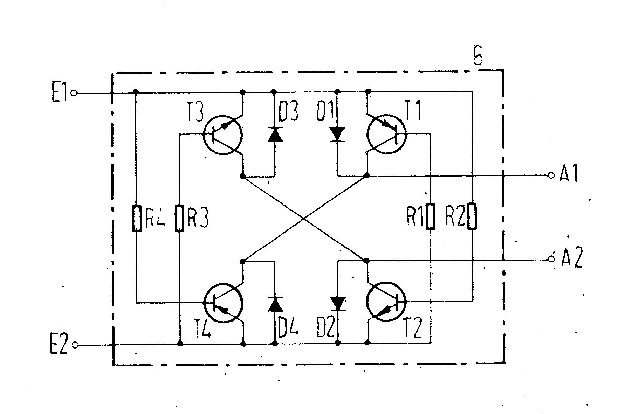

Im folgenden wird ein Ausführungsbeispiel der Gleichrichterbrückenschaltung anhand der Zeichnung näher erläutert.

Einer in der Fig. dargestellten Gleichrichterbrückenschaltung G werden an Eingangsklemmen E1 und E2 Eingangsspannungen oder Eingangsströme zugeführt, die unterschiedliche Polarität aufweisen können. An ihren Ausgangsklemmen A1 und A2 gibt die Gleichrichterbrückenschaltung G Ausgangsspannungen an einen Verbraucher ab. Die Gleichrichterbrückenschaltung G dient beispielsweise dazu, Eingangswechselspannungen gleichzurichten und Ausgangsspannungen mit vorgegebener Polarität zu erzeugen oder diese Ausgangsspannungen unabhängig von der Polarität einer Eingangsspannung zu erzeugen. Die Gleichrichterbrückenschaltung G kann in einer Schaltungsanordnung eingesetzt werden, die aus dem Schleifenstrom der Fernsprechleitung mit Energie versorgt wird, um unabhängig von der Polarität des Schleifenstroms eine Ausgangsspannung mit immer gleicher Polarität zu erzeugen.

Die Gleichrichterbrückenschaltung G enthält vier Transistoren T1 bis T4, von denen jeweils zwei vom gleichen Leitfähigkeitstyp sind. Die Transistoren T1 und T4 sind pnp-Transistoren, während die Transistoren T2 und T3 npn-Transistoren sind. Die Emitter der Transistoren T1 und T3 und der Transistoren T2 und T4 sind jeweils miteinander und mit den Eingangsklemmen E1 bzw. E2 verbunden, an denen die Eingangsspannungen anliegen. Die Kollektoren der Transistoren T1 und T4 und der Transistoren T2 und T3 sind ebenfalls miteinander verbunden und an die Ausgangsklemmen A1 bzw. A2 angeschlossen, an denen die Ausgangsspannungen abgegeben werden. Die Basen der Transistoren T1 bis T4 sind über Widerstände R1 bis R4 mit den Eingangsklemmen E1 oder E2 verbunden und zwar derart, daß sie immer mit demjenigen Pol der Spannungsquelle verbunden sind, an dem die entsprechenden Emitter nicht angeschlossen sind. Die an den Basen der Transistoren T2 und T4 angeschlossenen Widerstände R2 und R4 sind an der Eingangsklemme E1 angeschlossen, während die an den Basen der Transistoren T1 und T3 angeschlossenen Widerstände R1 und R3 mit der Eingangsklemme E2 verbunden sind.

Wenn an der Eingangsklemme E1 eine positive und damit an der Eingangsklemme E2 eine negative Spannung anliegt, werden über die Widerstände R1 und R2 die Transistoren T1 und T2 leitend gesteuert, während über die Widerstände R3 und R4 die Transistoren T3 und T4 gesperrt werden. Über den Transistor T1 fließt ein Strom zur Ausgangsklemme A1 und zum Verbraucher. Vom Verbraucher fließt über die Ausgangsklemme A2 der Strom über den Transistor T2 zur Eingangsklemme E2. An der Ausgangsklemme A1 entsteht der positive Pol und an der Ausgangsklemme A2 der negative Pol der Ausgangsspannung.

Wenn an der Eingangsklemme E2 eine positive und an der Eingangsklemme E1 eine negative Spannung anliegt, sind in entsprechender Weise über die Widerstände R3 und R4 die Transistoren T3 und T4 leitend gesteuert und über die Widerstände R1 und R2 die Transistoren T1 und T2 gesperrt. In diesem Fall fließt ein Strom über die Eingangsklemme E2 und den Transistor T4 zur Ausgangsklemme A1 und von der Ausgangsklemme A2 über den Transistor T3 zur Eingangsklemme E1. An der Ausgangsklemme A1 entsteht wieder der positive Pol der Ausgangsspannung, während an der Ausgangsklemme A2 der negative Pol anliegt. An den Ausgangsklemmen A1 und A2 wird damit unabhängig von der Polarität der Eingangsspannung immer eine Ausgangsspannung gleicher Polarität erzeugt.

Um eine große Störsicherheit der Gleichrichterbrückenschaltung zu erreichen, ist es günstig, wenn Transistoren verwendet werden, die hohe Basis-Emitter-Sperrspannungen aufweisen. Ein besonders vorteilhafter Aufbau der Gleichrichterbrückenschaltung wird daher insbesondere dann erreicht, wenn die Transistoren T1 und T4 als pnp-Germanium-Transistoren und die Transistoren T2 und T3 als npn-Silizium-Transistoren ausgebildet sind, da pnp-Germanium-Transistoren eine höhere Basisemittersperrspannung aufweisen, als pnp-Silizium-Transistoren und da npn-Silizium-Transistoren eine höhere Basisemittersperrspannung aufweisen als npn-Silizium-Transistoren.

Parallel zu den Kollektor Emitterstrecken der Transistoren T1 bis T4 sind Dioden D1 bis D4 angeordnet. Die Dioden D1 bis D4 sind derart gepolt, daß sie die jeweils gleichen Durchlaßrichtungen aufweisen wie die mit ihnen verbundenen Transistoren T1 bis T4. Die Dioden D1 bis D4 übernehmen einen Teil der Ausgangsströme, wenn die Ausgangsströme so groß sind, daß die Kollektor-Emitter-Durchlaßspannungen der Transistoren T1 bis T4 größer sind als die Durchlaßspannungen der Dioden D1 bis D4. Damit werden bei hohen Strömen die Transistoren T1 bis T4 entlastet.

## Ansprüche

1. Gleichrichterbrückenschaltung, bei der als Gleichrichterelemente vier Transistoren vorgesehen sind, von denen jeweils zwei vom gleichen Leitfähigkeitstyp sind, bei der die miteinander verbundenen Emitter von jeweils zwei Transistoren vom entgegengesetzten Leitfähigkeitstyp an jeweils einer Eingangsklemme angeschlossen sind, bei der an den miteinander verbundenen Kollektoren von jeweils zwei Transistoren vom gleichen Leitfähigkeitstyp eine gleichgerichtete Ausgangsspannung abgegeben wird und bei der die Basen derjenigen Transistoren, deren Emitter mit jeweils einer Eingangsklemme verbunden sind, über Widerstände mit der jeweils anderen Eingangsklemme verbunden sind, dadurch gekennzeichnet, daß parallel zu den Kollektor-Emitterstrecken der Transistoren (T1 bis T4) Dioden (D1 bis D4) angeordnet sind, deren Durchlaßrichtung mit der Durchlaßrichtung der Transistoren (T1 bis T4) übereinstimmt.

2. Gleichrichterbrückenschaltung nach Anspruch 1, dadurch gekennzeichnet, daß als Transistoren (T1, T4) des einen Leitfähigkeitstyps pnp-Germanium-Transistoren und als Transistoren (T2, T3) des anderen Leitfähigkeitstyps npn-Silizium-Transistoren vorgesehen sind.

## Claims

1. A rectifier bridge circuit, wherein four transistors are provided as rectifier elements, two of which are of the same conductivity type, with the mutually connected emitters of each two transistors of the opposite conductivity type connected to a respective input terminal, and a rectified output voltage emitted at the mutually connected collectors of each two transistors of the same conductivity type, and wherein the base electrodes of those transistors whose emitters are connected to a respective input terminal are each connected to the other respective input terminal by means of resistors, characterised in that diodes (D1 to D4) are connected in parallel with the collector-emitter paths of the transistors (T1 to T4) with their forward direction corresponding to the forward direction of the transistors (T1 to T4).

2. A rectifier bridge circuit as claimed in Claim 1, characterised in that transistors (T1, T4) of one conductivity type are pnp-germanium transistors and the transistors (T2, T3) of the other conductivity type are npn-silicon transistors.

## Revendications

1. Circuit de redresseur en pont, dans lequel il est prévu comme éléments redresseurs, quatre transistors dont deux possèdent respectivement le même type de conductivité, et dans lequel les émetteurs reliés entre eux de deux transistors respectifs possédant le type de conductivité opposé sont raccordés respectivement à une borne d'entrée, et dans lequel une tension de sortie redressée est délivrée au niveau des collecteurs, reliés entre eux, de respectivement deux transistors possédant le même type de conductivité, et dans lequel les bases des transistors, dont les émetteurs sont reliés à une borne respective d'entrée, sont raccordés par l'intermédiaire de résistances à l'autre borne d'entrée respective, caractérisé par le fait qu'en parallèle avec les voies collecteur-émetteur des transistors (T1 à T4) sont montées des diodes (D1 à D4) dont le sens passant coïncide avec le sens passant des transistors (T1 à T4).

2. Circuit de redresseur en pont, suivant la revendication 1, caractérisé par le fait que des transistors pnp au germanium sont prévus pour constituer les transistors (T1, T4) possédant le premier type de conductivité et que des transistors npn au silicium sont prévus pour constituer les transistors (T2, T3) possédant l'autre type de conductivité.